# EUROPEAN PATENT APPLICATION

(11) **EP 4 848 665 A1**
(43) Date of publication of application: **02.12.2026**
(21) Application number: 24923310.7
(22) Date of filing: 11.09.2024
(51) Int. Cl.: H04L 12/40

(54) **DATA TRANSMISSION METHOD BASED ON BUS TECHNOLOGY, AND RELATED APPARATUS**

(30) Priority: 08.02.2024 CN 202410178075; 30.04.2024 CN 202410543777
(71) Applicant: Huawei Cloud Computing Technologies Co., Ltd., Gui'an New District, Guizhou 550025 (CN)
(72) Inventor: CAO, Jincan, Guiyang, Guizhou 550025 (CN); HUANG, Fuguang, Guiyang, Guizhou 550025 (CN); YUAN, Shuai, Guiyang, Guizhou 550025 (CN); ZHU, Jinrui, Guiyang, Guizhou 550025 (CN)
(74) Representative: Huawei European IPR
(86) International application number: PCT/CN2024/118275
(87) International publication number: WO 2025/167102

(57) **Abstract**

This application provides a bus technology-based data transmission method and a related apparatus, applied to the field of computer technologies. In embodiments of this application, both a packet sequence number and feedback information from a second compute device are synchronized to a fusion network interface card, and the fusion network interface card performs unified management and configuration. After the fusion network interface card determines a network interface card corresponding to a sent packet, the fusion network interface card notifies the network interface card sending the corresponding packet of releasing buffer of the packet. This can ensure reliable data transmission between network devices, effectively ensure that data buffered in a physical network interface card is released, and avoid a case in which the network interface card that needs to release the buffer of the packet cannot perform release, without resulting in buffer overflow.

## Description

This application claims priorities to Chinese Patent Application No. 202410178075.2, filed with the China National Intellectual Property Administration on February 8, 2024 and entitled "BUS SWITCHING TECHNOLOGY-BASED PACKET FORWARDING METHOD AND APPARATUS", and to Chinese Patent Application No. 202410543777.6, filed with the China National Intellectual Property Administration on April 30, 2024 and entitled "BUS TECHNOLOGY-BASED DATA TRANSMISSION METHOD AND RELATED APPARATUS", both of which are incorporated herein by reference in their entireties.

### TECHNICAL FIELD

This application relates to the field of computer technologies, and in particular, to a bus technology-based data transmission method and a related apparatus.

### BACKGROUND

With the development of public cloud services, the demand for network bandwidth enhancement is increasingly growing. Conventional network interface cards need to be bound to a host, and a NIC is accessed by being mapped into a memory address space of the host. When there are a plurality of network interface cards, an application layer is required to specify which network interface card serves as a traffic egress. With the development of peer-to-peer (Peer2Peer) access buses such as CXL and NVLink in the industry, it is a common scenario that a plurality of network interface card devices are fused. However, after a plurality of physical network interface cards are fused into a logical network interface card through a bus switch, the fused logical network interface card has only one IP address. When data needs to be sent and received through the fused logical network interface card, a transmission path and a reception path exist correspondingly. When the transmission path and the reception path are on different physical links, the transmission path and the reception path for the logical network interface card to receive and send the data are inconsistent. As a result, the physical network interface card that originally has buffer occupation and needs to release the buffer cannot release the buffer.

Therefore, how to resolve the problem that buffer occupation in a network interface card cannot be released due to inconsistency between a transmission path and a reception path is a current research hotspot for those skilled in the art.

### SUMMARY

Embodiments of this application provide a bus technology-based data transmission method and a related apparatus, to effectively ensure that data buffered in a physical network interface card is released, and ensure reliable data transmission between network devices.

According to a first aspect, an embodiment of this application provides a bus technology-based data transmission method, applied to a fusion network interface card, where the fusion network interface card runs on a first compute device, the first compute device includes a first network interface card, a second network interface card, and a processor, and the method includes: receiving an original packet sent by the processor; configuring the first network interface card based on the original packet, to enable the first network interface card to send a first packet to a second compute device, where the first packet includes a first sequence number, and the first sequence number indicates that the first packet is sent by the first network interface card; obtaining first feedback information, where the first feedback information indicates that the second compute device successfully receives the first packet; and configuring the first network interface card based on the first feedback information and the first sequence number, to enable the first network interface card to release buffer of the first packet.

In this application, in one aspect, compared with the conventional technology in which the first compute device needs to split a packet before the packet is sent and an upper-layer application needs to sense a quantity of network interface cards at a physical layer, in this application, a plurality of physical network interface cards are fused into a fusion network interface card, and subsequent external operations are performed by an application layer and the fusion network interface card. Therefore, the application layer does not need to split the packet, and the upper-layer application does not need to sense the quantity of network interface cards at the physical layer, thereby reducing overheads of a network protocol stack. In addition, in the conventional technology, a maximum bandwidth of a device presented to the upper-layer application is a maximum capability of a network interface card/IO die. However, in this application, the plurality of physical network interface cards are fused into the fusion network interface card, so that a maximum bandwidth can exceed a bandwidth limit of a single physical network interface card.

On the other hand, in this application, both a packet sequence number and feedback information from the second compute device are synchronized to the fusion network interface card, and the fusion network interface card performs unified management and configuration. After the fusion network interface card determines a network interface card corresponding to a sent packet, the fusion network interface card notifies the network interface card sending the corresponding packet of releasing buffer of the packet. This can ensure reliable data transmission between network devices, effectively ensure that the data buffered in the physical network interface card is released, and avoid a case in which the network interface card that needs to release the buffer of the packet cannot perform release, without resulting in buffer overflow.

In a possible implementation of the first aspect, the obtaining the first feedback information includes: sending first indication information to the first network interface card or the second network interface card, where the first indication information indicates the first network interface card or the second network interface card to send the first feedback information to the fusion network interface card; and receiving the first feedback information forwarded by the first network interface card or the second network interface card.

In the foregoing implementation, the first feedback information obtained by the fusion network interface card may be forwarded by the first network interface card or the second network interface card based on the first indication information of the fusion network interface card.

In another possible implementation of the first aspect, the configuring the first network interface card based on the first feedback information and the first sequence number, to enable the first network interface card to release the buffer of the first packet includes: sending first reference information to the first network interface card based on the first feedback information and the first sequence number, where the first reference information is information generated based on the first feedback information and the first sequence number, and the first reference information is used to release the buffer of the first packet.

In another possible implementation of the first aspect, the first reference information is the first feedback information.

In the foregoing implementation, the first network interface card releases the packet buffer based on the first feedback information.

In another possible implementation of the first aspect, the first reference information is second indication information, and the second indication information indicates to release the buffered first packet.

In the foregoing implementation, the first network interface card releases the buffer of the packet based on the indication information of the fusion network interface card, and the first feedback information is still processed by the fusion network interface card.

In another possible implementation of the first aspect, the method further includes: obtaining second feedback information, where the second feedback information indicates that the second compute device successfully receives a second packet, the second packet includes a second sequence number, and the second sequence number indicates that the second packet is sent by the second network interface card; and sending second reference information to the second network interface card based on the second feedback information and the second sequence number, where the second reference information is information generated based on the second feedback information and the second sequence number, and the second reference information is used to release buffer of the second packet.

In the foregoing implementation, after successfully receiving the second packet, the second compute device may send the second feedback information to the fusion network interface card. When receiving the second feedback information from the second compute device, the first network interface card reports the second feedback information to the fusion network interface card. The fusion network interface card performs subsequent processing, for example, the fusion network interface card confirms, based on the second feedback information and the second sequence number included in the second packet, a network interface card corresponding to the second packet, and sends the second reference information to the second network interface card after determining that the network interface card that sends the second packet is the second network interface card, where the second reference information indicates the second network interface card to release the buffer of the second packet. In this application, the fusion network interface card uniformly manages the packet and the feedback information, so that the corresponding network interface card for sending the packet can be efficiently determined, and it is effectively ensured that data buffered in the physical network interface card is released.

In another possible implementation of the first aspect, the method further includes: obtaining third feedback information, where the third feedback information indicates that the second compute device fails to receive a third packet, the third packet includes a third sequence number, and the third sequence number indicates that the third packet is sent by the first network interface card; and sending third reference information to the first network interface card based on the third feedback information and the third sequence number, where the third reference information is determined based on the third feedback information, and the third feedback information is used to request the first network interface card to retransmit the third packet.

In the foregoing implementation, the packet needs to be retransmitted when the second compute device fails to receive the packet, to ensure reliable data transmission between network devices.

Optionally, in this application, the feedback information is not limited to packet arrival acknowledgment (acknowledgment, ACK) information or packet arrival negative acknowledgment (negative acknowledgment, NACK) information. Other information of a network, for example, an explicit congestion notification (explicit congestion notification, ECN) or a congestion notification packet (congestion notification packet, CNP) may also be used to implement information synchronization and operations in the same processing manner as described above.

In another possible implementation of the first aspect, the configuring the first network interface card based on the original packet, to enable the first network interface card to send the first packet to the second compute device includes: sending the original packet to the first network interface card, where the original packet does not include the first sequence number, and the first packet is generated by the first network interface card based on the original packet and the first sequence number.

In the foregoing implementation, the packet sequence number is generated by the first network interface card.

In another possible implementation of the first aspect, the configuring the first network interface card based on the original packet, to enable the first network interface card to send the first packet to the second compute device includes: adding a first sequence number to the original packet to obtain the first packet; and sending the first packet to the first network interface card, to enable the first network interface card to send the first packet to the second compute device.

In the foregoing implementation, the fusion network interface card generates the packet sequence number, and sends the obtained first packet to the first network interface card.

According to a second aspect, an embodiment of this application provides a bus technology-based data transmission method, applied to a first network interface card in a first compute device, where the first compute device includes the first network interface card, a second network interface card, and a processor, a fusion network interface card runs on the first compute device, and the method includes: receiving configuration information sent by the fusion network interface card, where the configuration information includes an original packet or a first packet, the configuration information indicates the first network interface card to send the first packet to a second compute device, the first packet includes a first sequence number, and the first sequence number indicates that the first packet is sent by the first network interface card; sending the first packet to the second compute device based on the configuration information; receiving first feedback information forwarded by the second network interface card, where the first feedback information indicates that the second compute device successfully receives the first packet; and releasing buffer of the first packet based on the first feedback information and the first sequence number.

In this application, packet synchronization is performed on the first feedback information from the second compute device among all network interface cards in a group. For example, after receiving the first feedback information forwarded by the second network interface card, the first network interface card determines whether the packet associated with the first feedback information is a packet sent by a local network interface card. The buffer of the packet is directly released if the packet is sent by the local network interface card. The first feedback information is forwarded to another network interface card if the packet is not sent by the local network interface card. In this application, packet synchronization between a plurality of network interface cards effectively ensures that data buffered in a physical network interface card is released, and ensures reliable data transmission between network devices.

In a possible implementation of the second aspect, the method further includes: receiving second feedback information sent by the second compute device, where the second feedback information indicates that the second compute device successfully receives a second packet, the second packet includes a second sequence number, and the second sequence number indicates that the second packet is sent by the second network interface card; and when the first network interface card determines that the second packet is not sent by the first network interface card, forwarding the second feedback information to the second network interface card or the fusion network interface card, where the second feedback information is used to release buffer of the second packet.

In the foregoing implementation, a case in which the first network interface card determines, after receiving the second feedback information from the second compute device, that the packet associated with the second feedback information is not the packet sent by the local network interface card is provided. In this case, the second feedback information is forwarded to the second network interface card. In this application, packet synchronization between a plurality of network interface cards effectively ensures that data buffered in a physical network interface card is released, and ensures reliable data transmission between network devices.

In another possible implementation of the second aspect, the method further includes: sending a third packet to the second compute device based on the configuration information, where the third packet includes a third sequence number, and the third sequence number indicates that the third packet is sent by the first network interface card; receiving third feedback information forwarded by the second network interface card, where the third feedback information indicates that the second compute device fails to receive the third packet, and the third feedback information is used to request the first network interface card to retransmit the third packet; and resending the third packet to the second compute device.

In the foregoing implementation, the packet needs to be retransmitted when the second compute device fails to receive the packet, to ensure reliable data transmission between network devices.

In another possible implementation of the second aspect, the configuration information includes the first packet, and the sending the first packet to the second compute device based on the configuration information includes: sending the first packet to the second compute device.

In another possible implementation of the second aspect, the configuration information includes the original packet, and the sending the first packet to the second compute device based on the configuration information includes: adding the first sequence number to the original packet to obtain the first packet; and sending the first packet to the second compute device.

According to a third aspect, an embodiment of this application provides a bus technology-based data transmission apparatus, where the data transmission apparatus includes a communication unit and a processing unit, and the communication unit is configured to receive an original packet sent by a processor. The processing unit is configured to configure a first network interface card based on the original packet, to enable the first network interface card to send a first packet to a second compute device, where the first packet includes a first sequence number, and the first sequence number indicates that the first packet is sent by the first network interface card. The processing unit is further configured to obtain first feedback information, where the first feedback information indicates that the second compute device successfully receives the first packet. The processing unit is further configured to configure the first network interface card based on the first feedback information and the first sequence number, to enable the first network interface card to release buffer of the first packet.

In a possible implementation of the third aspect, in terms of obtaining the first feedback information, the processing unit is specifically configured to: send first indication information to the first network interface card or the second network interface card, where the first indication information indicates the first network interface card or the second network interface card to send the first feedback information to the fusion network interface card; and receive the first feedback information forwarded by the first network interface card or the second network interface card.

In another possible implementation of the third aspect, in terms of configuring the first network interface card based on the first feedback information and the first sequence number, to enable the first network interface card to release the buffer of the first packet, the processing unit is specifically configured to: send first reference information to the first network interface card based on the first feedback information and the first sequence number, where the first reference information is information generated based on the first feedback information and the first sequence number, and the first reference information is used to release the buffer of the first packet.

In another possible implementation of the third aspect, the first reference information is the first feedback information.

In another possible implementation of the third aspect, the first reference information is second indication information, and the second indication information indicates to release the buffered first packet.

In another possible implementation of the third aspect, the processing unit is further configured to obtain second feedback information, where the second feedback information indicates that the second compute device successfully receives a second packet, the second packet includes a second sequence number, and the second sequence number indicates that the second packet is sent by the second network interface card. The communication unit is further configured to send second reference information to the second network interface card based on the second feedback information and the second sequence number, where the second reference information is information generated based on the second feedback information and the second sequence number, and the second reference information is used to release buffer of the second packet.

In another possible implementation of the third aspect, the processing unit is further configured to obtain third feedback information, where the third feedback information indicates that the second compute device fails to receive a third packet, the third packet includes the third sequence number, and the third sequence number indicates that the third packet is sent by the first network interface card. The communication unit is further configured to send third reference information to the first network interface card based on the third feedback information and the third sequence number, where the third reference information is determined based on the third feedback information, and the third feedback information is used to request the first network interface card to retransmit the third packet.

In another possible implementation of the third aspect, in the aspect of configuring the first network interface card based on the original packet, to enable the first network interface card to send the first packet to the second compute device, the processing unit is specifically configured to send the original packet to the first network interface card, where the original packet does not include the first sequence number, and the first packet is generated by the first network interface card based on the original packet and the first sequence number.

In another possible implementation of the third aspect, in the aspect of configuring the first network interface card based on the original packet, to enable the first network interface card to send the first packet to the second compute device, the processing unit is specifically configured to: add the first sequence number to the original packet to obtain the first packet; and send the first packet to the first network interface card, to enable the first network interface card to send the first packet to the second compute device.

According to a fourth aspect, an embodiment of this application provides a bus technology-based data transmission apparatus. The data transmission apparatus includes a communication unit and a processing unit. The communication unit is configured to receive configuration information sent by a fusion network interface card, where the configuration information includes an original packet or a first packet, the configuration information indicates the first network interface card to send the first packet to a second compute device, the first packet includes a first sequence number, and the first sequence number indicates that the first packet is sent by the first network interface card. The communication unit is further configured to send the first packet to the second compute device based on the configuration information. The communication unit is further configured to receive first feedback information forwarded by a second network interface card, where the first feedback information indicates that the second compute device successfully receives the first packet. The processing unit is configured to release buffer of the first packet based on the first feedback information and the first sequence number.

In a possible implementation of the fourth aspect, the communication unit is further configured to receive second feedback information sent by the second compute device, where the second feedback information indicates that the second compute device successfully receives a second packet, the second packet includes a second sequence number, and the second sequence number indicates that the second packet is sent by the second network interface card. The communication unit is further configured to forward the second feedback information to the second network interface card or the fusion network interface card when the first network interface card determines that the second packet is not sent by the first network interface card, where the second feedback information is used to release buffer of the second packet.

In another possible implementation of the fourth aspect, the communication unit is further configured to send a third packet to the second compute device based on the configuration information, where the third packet includes a third sequence number, and the third sequence number indicates that the third packet is sent by the first network interface card. The communication unit is further configured to receive third feedback information forwarded by the second network interface card or the fusion network interface card, where the third feedback information indicates that the second compute device fails to receive the third packet, and the third feedback information is used to request the first network interface card to retransmit the third packet. The communication unit is further configured to resend the third packet to the second compute device.

In another possible implementation of the fourth aspect, the configuration information includes the first packet, and in the aspect of sending the first packet to the second compute device based on the configuration information, the communication unit is specifically configured to send the first packet to the second compute device.

In another possible implementation of the fourth aspect, the configuration information includes the original packet, and in the aspect of sending the first packet to the second compute device based on the configuration information, the communication unit is specifically configured to: add the first sequence number to the original packet to obtain the first packet; and send the first packet to the second compute device.

According to a fifth aspect, an embodiment of this application provides a compute device, where the compute device includes a first network interface card, a second network interface card, and a processor, the first network interface card is a first network interface card for implementing the method according to any one of the first aspect and the second aspect, the second network interface card is a second network interface card for implementing the method according to any one of the first aspect and the second aspect, and the processor is a processor for implementing the method according to any one of the first aspect and the second aspect.

According to a sixth aspect, an embodiment of this application provides a bus technology-based data transmission system, where the data transmission system includes the compute device according to the fifth aspect.

According to a seventh aspect, an embodiment of this application provides a computer-readable storage medium. The computer-readable storage medium is configured to store instructions or a computer program. When the instructions or the computer program is executed, the method according to any one of the first aspect and the second aspect or the possible implementations of the first aspect and the second aspect is implemented.

According to an eighth aspect, this application provides a computer program product. The computer program product includes computer instructions. When the instructions are run on at least one processor, the method according to any one of the first aspect to the fifth aspect or the possible implementations of the first aspect to the fifth aspect may be implemented. The computer program product may be a software installation package. When the foregoing method needs to be used, the computer program product may be downloaded and executed on a compute device.

For beneficial effects of the technical solutions provided in the third aspect to the eighth aspect of this application, refer to the beneficial effects of the technical solutions in the first aspect and the second aspect. Details are not described herein again.

### BRIEF DESCRIPTION OF DRAWINGS

FIG. 1 is a diagram of an architecture of a bus technology-based data transmission system according to an embodiment of this application;
FIG. 2 is a diagram of an architecture of a first compute device according to an embodiment of this application;
FIG. 3 is a diagram of forwarding traffic across servers in a typical bus network according to an embodiment of this application;
FIG. 4 is a schematic interaction flowchart of a bus technology-based data transmission method according to an embodiment of this application;
FIG. 5 is a diagram in which a fusion network interface card configures a first network interface card to enable the first network interface card to release buffer of a first packet according to an embodiment of this application;
FIG. 6 is a schematic interaction flowchart of another bus technology-based data transmission method according to an embodiment of this application;
FIG. 7 is another diagram in which a fusion network interface card configures a first network interface card to enable the first network interface card to release buffer of a first packet according to an embodiment of this application;
FIG. 8 is a diagram of a structure of a bus technology-based data transmission apparatus 80 according to an embodiment of this application;
FIG. 9 is a diagram of a structure of another bus technology-based data transmission apparatus 90 according to an embodiment of this application;
FIG. 10 is a diagram of a structure of still another bus technology-based data transmission apparatus 100 according to an embodiment of this application; and
FIG. 11 is a diagram of a structure of a data transmission apparatus pool 110 according to an embodiment of this application.

### DESCRIPTION OF EMBODIMENTS

For ease of understanding, the following first describes related terms that may be used in embodiments of this application.

### 1. Physical network interface card

The physical network interface card (network interface card, NIC) may also be referred to as a network interface card or a network adapter. The physical network interface card is responsible for electrical connection between a computer and a network medium, transmission of a bit data stream, and network address confirmation. Main technical parameters are a bandwidth speed, a bus mode, and an electrical interface mode.

### 2. SR-IOV

Two new function types in the SR-IOV are: physical function (physical function, PF) and virtual function (virtual function, VF).

The PF is used to support a PCI function of a SR-IOV function. The PF is a full-function PCIe function, and can be discovered, managed, and processed like any other PCIe device. The PF has full configuration resources and can be used to configure or control the PCIe device.

A PF can be extended to several VFs. The VF may also be referred to as a fusion network interface card or a virtual network interface card. The VF is a "network interface card" or an instance virtualized from a physical network interface card that supports the SR-IOV. The VF is presented in a form of an independent network interface card. Each VF has its own exclusive PCI configuration area, and may share a same physical resource with another VF, that is, share a same physical network port.

After the SR-IOV is enabled, the physical network interface card exchanges data with a virtual machine. In this way, an intermediate virtualization stack can be skipped, and performance of a nearly pure physical environment can be achieved. This is a biggest value of the SR-IOV, and is different from a case in which a virtual machine transfers traffic through a simulation device and a virtualization layer.

### 3. Packet sequence number

The packet sequence number (packet sequence number, PSN) is used to identify each packet segment, so that a destination host can confirm that data in a specified packet segment has been received. When a source host is used to send a packet via a plurality of packet segments, the destination host can still sort packets in sequence based on sequence numbers, even if the packets arrive at the destination host in a different sequence.

For packet segments including data, a number of a first data byte in the packet segment is an initial sequence number, and data bytes subsequent to the first data byte are numbered sequentially. If the source host sends another packet segment using a same connection, a sequence number of the packet segment is equal to a sum of a sequence number of a previous packet segment and a quantity of data bytes in the previous packet segment. For example, if the source host sends three packet segments, each packet segment has 100 bytes of data, and a sequence number of a first packet segment is 1000, a sequence number of a second packet segment is 1100 (1000 + 100), and a sequence number of a third packet segment is 1200 (1100 + 100). The sequence number is reset to 0 if the sequence number reaches a maximum value.

### 4. Packet arrival acknowledgment

A destination host returns a packet arrival acknowledgment (acknowledge character, ACK) number, to enable a source host to know that one or more packet segments have been received. This field is valid only if an ACK control bit is set to 1. The acknowledgment number is equal to a sequence number of a last packet segment received in sequence plus 1. This is also a sequence number of a packet segment that the destination host expects to receive next. After the acknowledgment number is returned, a computer considers that all data with sequence numbers smaller than the acknowledgment number has been received.

For example, a sequence number is equal to a sum of a sequence number of a previous packet segment and a quantity of data bytes in the previous packet segment. For example, if the source host sends three packet segments, each packet segment has 100 bytes of data, and a sequence number of a first packet segment is 1000, the destination host returns a header with an acknowledgment number 1100 after receiving the first packet segment. After receiving a second packet segment (whose sequence number is 1100), the destination host returns an acknowledgment number 1200. After receiving a third packet segment, the destination host returns an acknowledgment number 1300.

The destination host may not return an acknowledgment number each time the destination host receives a packet segment. In the preceding example, the destination host may return a packet segment with the acknowledgment number 1300 until all the three packet segments are received, indicating that all 1200 bytes of data have been received. However, if the destination host waits too long before returning the acknowledgment number, the source host will consider that the data has not reached the destination host and automatically retransmits the data.

In the preceding example, if the destination host receives the first packet segment with the packet segment number 1000 and the last packet segment with the packet segment number 1200, the destination host may return the acknowledgment number 1100. However, before returning the acknowledgment number 1300, the destination host should wait for the intermediate packet segment with the packet segment number 1100.

The following describes a system architecture in embodiments of this application. It should be noted that the system architecture and the service scenario described in this application are intended to describe the technical solutions in this application more clearly, and do not constitute a limitation on the technical solutions provided in this application. A person of ordinary skill in the art may be aware that with evolution of the system architecture and emergence of new service scenarios, the technical solutions provided in this application are also applicable to similar technical problems.

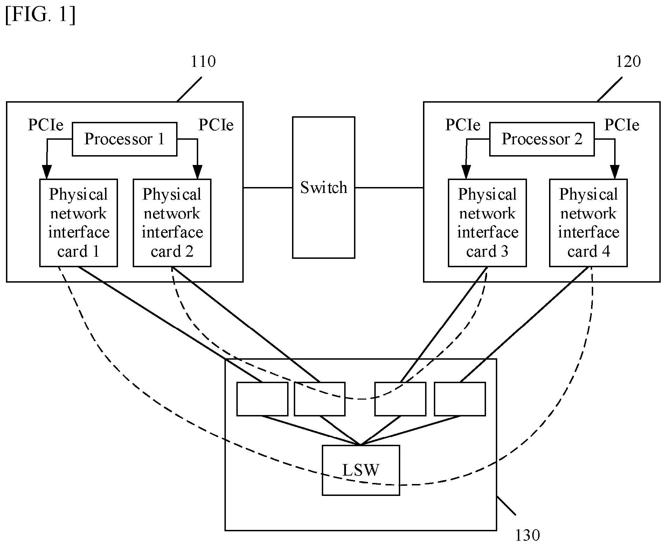

FIG. 1 is a diagram of an architecture of a bus technology-based data transmission system according to an embodiment of this application. As shown in FIG. 1, the data transmission system includes a first compute device 110, a second compute device 120, and a network device 130. In FIG. 1, an example in which the first compute device 110 is a server A and the second compute device 120 is a server B is used. The server A supports receiving data and/or sending data. The server B also supports receiving data and/or sending data. The server A may be used as a transmitting device, and send data to the server B via the network device 130. Correspondingly, the server B may be used as a receiving device, and receive data from the server A via the network device 130. Alternatively, the server B may be used as a transmitting device, and send data to the server A via the network device 130. Correspondingly, the server A may be used as a receiving device, and receive data from the server B via the network device 130. For ease of understanding, FIG. 1 is described by using an example in which the server A sends data to the server B via the network device 130. In addition, there is one or more intermediate devices (for example, a switch shown in FIG. 1) between the server A and the server B.

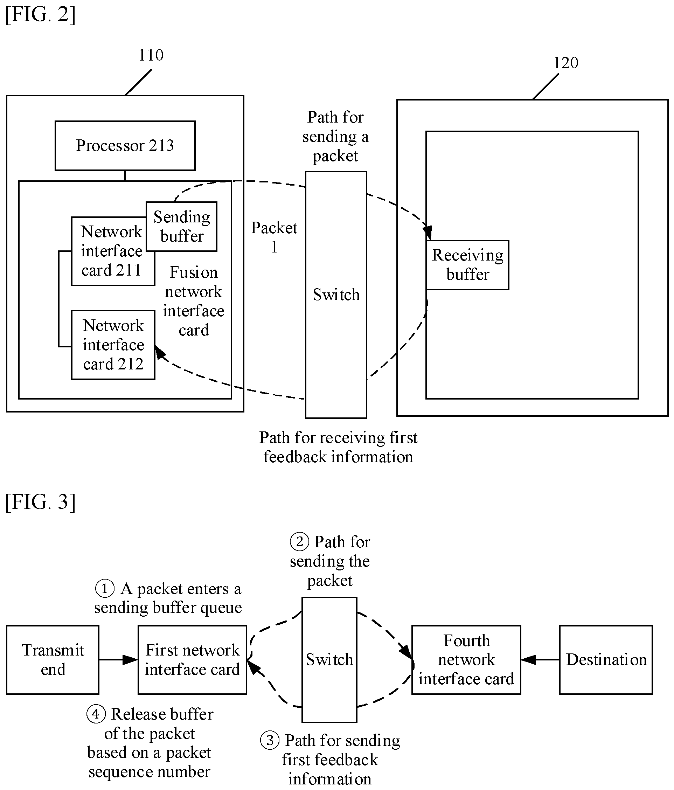

In a possible design, as shown in FIG. 1, a first network interface card (for example, represented as a physical network interface card 1), a second network interface card (for example, represented as a physical network interface card 2), and a processor (for example, represented as a processor 1) are installed (or deployed) in the server A. As shown in FIG. 2, the first network interface card and the second network interface card in the first compute device 110 are fused into a fusion network interface card, and the fusion network interface card runs on the first compute device 110. In other words, the fusion network interface card may run on at least one independent device in the first compute device 110. For example, the fusion network interface card may run on the first network interface card, or run on a component in the first network interface card, for example, a chip or an integrated circuit. For another example, the fusion network interface card may run on the second network interface card, or run on a component in the second network interface card, for example, a chip or an integrated circuit. For still another example, the fusion network interface card may run on both the first network interface card and the second network interface card, or run on a component in a device obtained by fusing the first network interface card and the second network interface card, for example, a chip or an integrated circuit. In FIG. 2, an example in which the first network interface card is a network interface card 211, the second network interface card is a network interface card 212, and the processor is a processor 213 is used. The fusion network interface card implements data receiving and sending and packet buffer releasing by configuring the network interface card 211 or the network interface card 212. For example, the following steps may be included: The fusion network interface card receives an original packet sent by the processor 213; and then the fusion network interface card configures the network interface card 211 based on the original packet, to enable the network interface card 211 to send a packet 1 to the second compute device 120, where the packet 1 includes a sequence number 001, and the sequence number 001 indicates that the packet 1 is sent by the network interface card 211. Then, the fusion network interface card obtains the first feedback information, where the first feedback information indicates that the second compute device 120 successfully receives the packet 1. Finally, the fusion network interface card configures the network interface card 211 based on the first feedback information and the sequence number 001, to enable the network interface card 211 to release buffer of the packet 1.

In another possible design, still as shown in FIG. 1, a first network interface card, a second network interface card, and a processor are installed (or deployed) in the first compute device 110. The first network interface card and the second network interface card in the first compute device 110 are fused into a fusion network interface card, and the fusion network interface card runs on the first compute device 110. In FIG. 2, an example in which the first network interface card is the network interface card 211, the second network interface card is the network interface card 212, and the processor is the processor 213 is used. The network interface card 211 or the network interface card 212 implements data receiving and sending and packet buffer releasing. For example, the following steps may be included: The network interface card 211 receives configuration information sent by the fusion network interface card, where the configuration information includes an original packet or a packet 1, and the configuration information indicates the network interface card 211 to send the packet 1 to the second compute device 120, where the packet 1 includes a sequence number 001, and the sequence number 001 indicates that the packet 1 is sent by the network interface card 211. Then, the network interface card 211 sends the packet 1 to the second compute device 120 based on the configuration information. Then, the network interface card 211 receives first feedback information forwarded by the network interface card 212, where the first feedback information indicates that the second compute device 120 successfully receives the packet 1. Finally, the network interface card 211 releases buffer of the packet 1 based on the first feedback information and the sequence number 001.

Optionally, the network interface card 211, the network interface card 212, and the processor 213 may communicate with each other by using a bus (not shown in FIG. 1 and FIG. 2). The bus may be, for example, a bus based on a high-speed serial computer extended bus standard (peripheral component interconnect express, PCIe), or may be a compute express link (compute express link, CXL) bus, a serial communication interface SCI (serial communication interface) bus, or an I2C (Inter-Integrated Circuit) bus. However, this is not limited in this embodiment of this application.

Before the solutions of this application are described, the following descriptions are provided.
(1) In this application, an "indication" may include a direct indication, an indirect indication, an explicit indication, and an implicit indication. When a specific piece of indication information is described as indicating A, it may be understood as that, the indication information carries A, directly indicates A, or indirectly indicates A.

In this application, information indicated by the indication information is referred to as to-be-indicated information. In a specific implementation process, there are manners of indicating the to-be-indicated information. For example, the manners include but are not limited to a manner in which the to-be-indicated information, for example, the to-be-indicated information or an index of the to-be-indicated information, may be directly indicated. The to-be-indicated information may alternatively be indirectly indicated by indicating other information, where there is an association relationship between the other information and the to-be-indicated information. Alternatively, only one part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, the to-be-indicated information may be sent as a whole, or may be divided into a plurality of pieces of sub-information for separate sending, where sending periodicities and/or sending occasions of these pieces of sub-information may be the same or different.

(2) In this application, "sending" and "receiving" indicate signal transmission directions. For example, "sending information to XX" may be understood as that a destination of the information is XX, and may include direct sending through an air interface, or include indirect sending through an air interface by another unit or module. "Receiving information from YY" may be understood as that a source of the information is YY, and may include direct receiving from YY through an air interface, or may include indirect receiving from YY via another unit or module through an air interface. "Sending" may alternatively be understood as "outputting" of a chip interface, and "receiving" may alternatively be understood as "inputting" of the chip interface. In other words, sending and receiving may be performed between devices, for example, between a network device and a terminal device; or may be performed inside a device, for example, sending or receiving between components, modules, chips, software modules, or hardware modules inside the device through a bus, a cable, or an interface.

The following describes embodiments of this application in detail with reference to accompanying drawings.

FIG. 3 is a diagram of forwarding traffic across servers in a typical bus network according to an embodiment of this application. As shown in FIG. 3, a specific process may be divided into the following several steps.

Step 1: A transmit end sends a packet to a transmit queue of a first network interface card.

Step 2: The first network interface card sends the packet to a destination through a link.

Step 3: A fourth network interface card sends first feedback information to the first network interface card.

The first feedback information indicates that the destination successfully receives the packet.

Step 4: The first network interface card releases buffer of a local packet based on the first feedback information.

In an existing solution, if an access bandwidth of two servers exceeds a capability of a single network interface card, two network interface cards are configured on the servers and registered with a host. An upper-layer application specifies a network port from which traffic is sent out of a device. A maximum network bandwidth capability of a single stream is a capability of a single network interface card. With development of peer-to-peer (Peer2Peer) access buses such as CXL and NVLink in the industry, it is a common scenario that a plurality of network interface card devices are fused. However, after a plurality of physical network interface cards are fused into a logical network interface card via a bus switch, the fused logical network interface card has only one IP address. When data needs to be sent and received by using the fused logical network interface card, there are correspondingly a path for sending a packet and a path for receiving the first feedback information. With reference to FIG. 2, when the path for sending the packet and the path for receiving the first feedback information are on different physical links, a reception path and a transmission path for the logical network interface card to receive and send data are inconsistent. As a result, the physical network interface card that originally has buffer occupation and needs to release the buffer cannot release the buffer. The foregoing specific process may be divided into the following several steps.

Step 11: A plurality of physical network interface cards in a first compute device are fused into one fusion network interface card.

Step 21: The first network interface card in the first compute device sends the packet to a fourth network interface card of a second compute device through the link.

Step 31: The second compute device sends the first feedback information to the first compute device.

The first feedback information indicates that the second compute device successfully receives the packet, and the first feedback information is forwarded to a second network interface card after passing through a switch. In other words, a transmission path of the packet and a reception path of the packet are inconsistent.

Step 41: The second network interface card does not have a corresponding packet whose buffer needs to be released.

Step 51: The buffer of the packet of the first network interface card cannot be released, resulting in buffer overflow.

In view of this, embodiments of this application provide a data transmission method and a related apparatus, to effectively ensure that data buffered in the physical network interface card is released, and ensure reliable data transmission between network devices.

For ease of description, in embodiments of this application, a specific example may be described by using the first network interface card and the second network interface card as an example, or by using the fusion network interface card, the first network interface card, and the second network interface card as an example. However, this should not be construed as a limitation on embodiments of this application.

The following describes embodiments of this application in detail with reference to accompanying drawings.

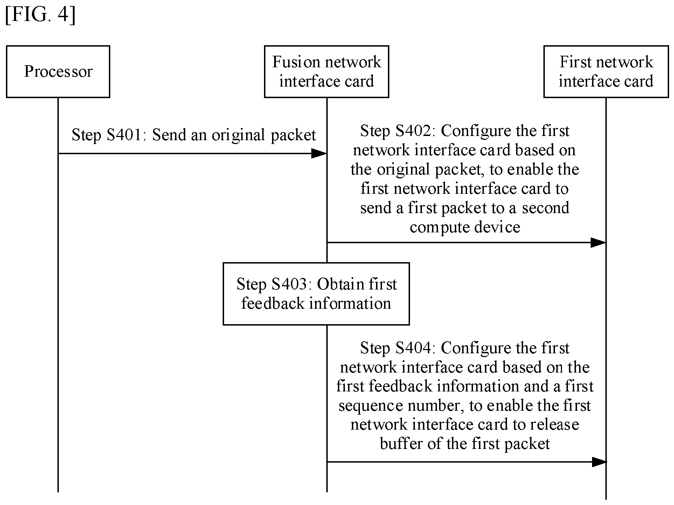

FIG. 4 is a schematic interaction flowchart of a bus technology-based data transmission method according to an embodiment of this application. The data transmission method may also be referred to as a bus switching technology-based packet forwarding method. It should be understood that names of a method, an apparatus, and information in this application are merely examples, and the names may be replaced with any other names in a specific implementation process. The data transmission method is described from a perspective of interaction between the processor, the fusion network interface card, and the first network interface card. Optionally, the data transmission method may be applied to the foregoing data transmission system, for example, the data transmission system shown in FIG. 1 and FIG. 2.

The data transmission method includes one or more of step S401 to step S404. It should be understood that, herein, for ease of description, a sequence of step S401 to step S404 is used for description, but this is not intended to limit execution necessarily in the foregoing sequence. An execution sequence, execution time, a quantity of execution times, and the like of the foregoing one or more steps are not limited in embodiments of this application. Another step may alternatively be interpolated between, before or after these steps as required. Step S401 to step S404 are specifically as follows.

Step S401: A processor sends an original packet to a fusion network interface card.

Correspondingly, the fusion network interface card receives the original packet sent by the processor.

The fusion network interface card is formed by fusing a first network interface card and a second network interface card. The fusion network interface card runs on a first compute device. The first compute device includes the first network interface card, the second network interface card, and the processor. The first compute device is a device having a communication capability and a computing capability. For example, the first compute device may be a cloud, or the first compute device may be a server. This is not limited in this application.

The first network interface card and the second network interface card are also devices having a communication capability and a computing capability. The first network interface card or the second network interface card is an example name used to distinguish from a network interface card. For example, the first network interface card or the second network interface card may be a physical network interface card 1, a physical network interface card 2, a physical network interface card 3, or another network interface card.

Step S402: The fusion network interface card configures the first network interface card based on the original packet, to enable the first network interface card to send a first packet to a second compute device.

The second compute device is a device having a communication capability and a computing capability. For example, the second compute device may be a cloud, or the second compute device may be a server. This is not limited in this application. The first packet includes a first sequence number, and the first sequence number indicates that the first packet is sent by the first network interface card. The first sequence number is an example name used to distinguish from a sequence number. For example, the first sequence number may be a sequence number 1, a sequence number 2, a sequence number 3, or another self-named sequence number. The first packet is an example name used to distinguish from a packet. For example, the first packet may be a packet 1, a packet 2, a packet 3, or another packet.

Optionally, that the first sequence number indicates that the first packet is sent by the first network interface card indicates that a mapping relationship is formed between the first sequence number, the first packet, and the first network interface card, so that the first network interface card searches for the first packet sent by the first network interface card. For example, the first packet is the packet 1. A sequence number carried in the packet 1 is 001, and a network interface card corresponding to the sent packet 1 is the physical network interface card 1.

Optionally, the following describes, by using examples, two possible implementations in which the fusion network interface card configures the first network interface card based on the original packet, to enable the first network interface card to send the first packet to the second compute device. Details are as follows.

Implementation 1: The first packet is generated by adding the first sequence number to the original packet by the first network interface card.

For example, the fusion network interface card sends the original packet to the first network interface card, to enable the first network interface card to generate the first packet based on the original packet and send the first packet to the second compute device. After receiving the original packet from the fusion network interface card, the first network interface card adds the first sequence number to the original packet to obtain the first packet, and actively sends the first packet to the second compute device (that is, no instruction from the fusion network interface card is required for triggering).

Implementation 2: The first packet is generated by adding the first sequence number to the original packet by the fusion network interface card.

For example, the fusion network interface card generates the first packet based on the original packet, and sends the first packet to the first network interface card, to enable the first network interface card to send the first packet to the second compute device.

Step S403: The fusion network interface card obtains first feedback information.

The first feedback information is an example name used to distinguish from a piece of feedback information. For example, the first feedback information is packet arrival acknowledgment (acknowledgment, ACK) information, and the first feedback information indicates that the second compute device successfully receives the first packet. For example, the first feedback information is information sent by the second compute device to the fusion network interface card after the second compute device successfully receives the packet 1. The first feedback information randomly arrives at the physical network interface card 1 or the physical network interface card 2.

Optionally, that the first feedback information indicates that the second compute device successfully receives the first packet indicates that the first feedback information may be sent by the first network interface card or the second network interface card to the fusion network interface card according to an instruction from the fusion network interface card, or may be actively reported by the first network interface card or the second network interface card to the fusion network interface card (that is, no instruction from the fusion network interface card is required for triggering).

Further, optionally, the first feedback information is information sent by the second compute device to the fusion network interface card after the second compute device successfully receives a plurality of packets, where the plurality of packets respectively include a plurality of sequence numbers, for example, the first sequence number carried in the first packet, a second sequence number carried in a second packet, and a third sequence number carried in a third packet.

For example, in a packet sending queue table shown in Table 1, the packet 1 includes the sequence number 001, and the network interface card corresponding to the sent packet 1 is the physical network interface card 1; the packet 2 includes a sequence number 002, and a network interface card corresponding to the sent packet 2 is the physical network interface card 2; and the packet 3 includes a sequence number 003, and a network interface card corresponding to the sent packet 3 is the physical network interface card 1.

**Table 1**

| Packet name | Packet sequence number | Network interface card name |
|---|---|---|
| Packet 1 | 001 | Physical network interface card 1 |
| Packet 2 | 002 | Physical network interface card 2 |
| Packet 3 | 003 | Physical network interface card 1 |

Optionally, the following describes, by using examples, two possible implementations in which the fusion network interface card obtains the first feedback information. Details are as follows.

Implementation 1: The fusion network interface card indicates the first network interface card or the second network interface card to forward the first feedback information to the fusion network interface card, that is, the fusion network interface card needs to deliver the instruction.

Implementation 2: The first network interface card or the second network interface card actively reports the first feedback information to the fusion network interface card, and the fusion network interface card does not need to deliver the instruction.

Step S404: The fusion network interface card configures the first network interface card based on the first feedback information and the first sequence number, to enable the first network interface card to release buffer of the first packet.

Optionally, the configuration may be that the fusion network interface card sends an instruction to the first network interface card based on the first feedback information and the first sequence number, to indicate the first network interface card to release the buffer of the first packet, or the fusion network interface card may directly send the first feedback information and the first sequence number to the first network interface card, and the first network interface card releases the buffer of the first packet based on the first feedback information and the first sequence number (that is, no instruction from the fusion network interface card is required for triggering this operation), or another rational meaning. A definition of the configuration is not limited in this application.

Further, optionally, the fusion network interface card sends first reference information to the first network interface card based on the first feedback information and the first sequence number.

The first reference information is an example name used to distinguish from a piece of reference information. The first reference information may be information generated by the fusion network interface card based on the first feedback information and the first sequence number, and the first reference information is used to release the buffer of the first packet.

Optionally, the following describes two possible cases of the first reference information by using examples. Details are as follows.

Case 1: The first reference information is the first feedback information. In other words, the first network interface card directly releases the buffer of the packet based on the first feedback information.

For example, with reference to Table 1, the first packet is the packet 1, the first sequence number is the sequence number 001, and the network interface card corresponding to the sent packet 1 is the physical network interface card 1. When the first feedback information is the information sent by the second compute device to the fusion network interface card after the second compute device successfully receives the packet 1, the fusion network interface card forwards the first feedback information and the sequence number 001 corresponding to the packet 1 to the physical network interface card 1. The physical network interface card 1 determines whether the packet 1 is a packet sent by the physical network interface card 1. If the packet 1 is the packet sent by the physical network interface card 1, it indicates that reliable data transmission is implemented, and the physical network interface card 1 directly releases the buffer of the packet 1.

Case 2: The first reference information is first indication information, and the first indication information indicates to release the buffered first packet. In other words, the first network interface card releases the buffer of packet based on the indication information of the fusion network interface card, and the first feedback information is still processed by the fusion network interface card.

For example, with reference to Table 1, the first packet is the packet 1, the first sequence number is the sequence number 001, and the network interface card corresponding to the sent packet 1 is the physical network interface card 1. When the first feedback information is information sent by the second compute device to the fusion network interface card after the second compute device successfully receives the packet 1, to avoid inconsistency between a reception path and a transmission path of the packet 1 and successfully release the buffer of the packet 1 in the network interface card, the fusion network interface card sends the first feedback information and the sequence number 001 corresponding to the packet 1 to the physical network interface card 1 after confirmation. The physical network interface card 1 directly releases the packet 1 buffered in the physical network interface card 1 based on the first feedback information and the sequence number 001 corresponding to the packet 1, thereby optimizing resource utilization and reducing database load.

In a possible implementation, the fusion network interface card obtains third feedback information.

The third feedback information is an example name used to distinguish from a piece of feedback information. For example, the third feedback information is packet arrival acknowledgment information, and the third feedback information indicates that the second compute device successfully receives the third packet. For example, the third feedback information is information sent by the second compute device to the fusion network interface card after the second compute device successfully receives the packet 2. The third feedback information randomly arrives at the physical network interface card 1 or the physical network interface card 2.

The third packet includes a third sequence number, and the third sequence number indicates that the third packet is sent by the second network interface card.

Optionally, that the third feedback information indicates that the second compute device successfully receives the third packet indicates that the third feedback information may be sent by the first network interface card or the second network interface card to the fusion network interface card according to the instruction from the fusion network interface card, or may be actively reported by the first network interface card or the second network interface card to the fusion network interface card (that is, no instruction from the fusion network interface card is required for triggering). Details are as follows.

Implementation 1: The fusion network interface card sends second indication information to the first network interface card or the second network interface card, and the fusion network interface card receives third feedback information forwarded by the first network interface card or the second network interface card.

The fourth indication information indicates the first network interface card or the second network interface card to send the third feedback information to the fusion network interface card.

Implementation 2: The fusion network interface card receives third feedback information forwarded by the first network interface card or the second network interface card (the first network interface card or the second network interface card actively reports the third feedback information, and no instruction from the fusion network interface card is required for triggering).

Further, optionally, the fusion network interface card sends the third reference information to the second network interface card based on the third feedback information and the third sequence number.

The third reference information is an example name used to distinguish from a piece of reference information. The third reference information may be information generated by the fusion network interface card based on the third feedback information and the third sequence number, and the third reference information is used to release the buffer of the third packet.

Optionally, the following describes two possible cases of the third reference information by using examples. Details are as follows.

Case 1: The third reference information is the third feedback information. In other words, the second network interface card directly releases the buffer of the packet based on the third feedback information.

For example, with reference to Table 1, the third packet is the packet 2, the third sequence number is the sequence number 002, and the network interface card corresponding to the sent packet 2 is the physical network interface card 2. When the third feedback information is information sent by the second compute device to the fusion network interface card after the second compute device successfully receives the packet 2, the fusion network interface card forwards the third feedback information and the sequence number 002 corresponding to the packet 2 to the physical network interface card 2. The physical network interface card 2 determines whether the packet 2 is a packet sent by the physical network interface card 2. If the packet 2 is the packet sent by the physical network interface card 2, it indicates that reliable data transmission is implemented, and the physical network interface card 2 directly releases buffer of the packet 2.

Case 2: The third reference information is third indication information, and the third indication information indicates to release the buffered third packet. In other words, the second network interface card directly releases the buffer of the packet based on the indication information of the fusion network interface card, and the third feedback information is still processed by the fusion network interface card. For example, with reference to Table 1, the third packet is the packet 2, the third sequence number is the sequence number 002, and the network interface card corresponding to the sent packet 2 is the physical network interface card 2. When the third feedback information is information sent by the second compute device to the fusion network interface card after the second compute device successfully receives the packet 2, to avoid inconsistency between a reception path and a transmission path of the packet 2, and successfully release the buffer of the packet 2 in the network interface card, the fusion network interface card sends the third feedback information and the sequence number 002 corresponding to the packet 2 to the physical network interface card 2 after confirmation. The physical network interface card 2 directly releases the packet 2 buffered by the physical network interface card 2 based on the third feedback information and the sequence number 002 corresponding to the packet 2, thereby optimizing resource utilization and reducing database load.

Optionally, other information of the network, for example, a packet arrival negative acknowledgment (negative acknowledgment, NACK) information, an explicit congestion notification (explicit congestion notification, ECN), or a congestion notification packet (congestion notification packet, CNP), may also be used to implement information synchronization and operations in the same processing manner as described above.

It should be noted that, in a process of transmitting data between devices, after a transmit end sends data, the data is forwarded to a receive end through a switch. However, in this process, the receive end may fail to successfully receive a packet due to an unstable network or another reason. Therefore, the transmit end can release the local buffer only after confirming that the packet is received. If the transmit end does not confirm that the packet is received, the data needs to be retransmitted, to ensure validity of data transmission in a communication process. For example, the packet needs to be retransmitted when the second compute device fails to successfully receive the packet, to ensure reliable data transmission between network devices.

In a possible implementation, the fusion network interface card obtains second feedback information.

The second feedback information is an example name used to distinguish from a piece of feedback information. For example, the second feedback information is packet arrival negative acknowledgment information, and the second feedback information indicates that the second compute device fails to successfully receive the second packet. For example, the second feedback information is information sent by the second compute device to the fusion network interface card after the second compute device fails to successfully receive the packet 3. The second feedback information randomly arrives at the physical network interface card 1 or the physical network interface card 2.

The second packet includes a second sequence number, and the second sequence number indicates that the second packet is sent by the first network interface card.

Optionally, that the second feedback information indicates that the second compute device fails to successfully receive the second packet indicates that the second feedback information may be sent by the first network interface card or the second network interface card to the fusion network interface card according to an instruction from the fusion network interface card, or may be actively reported by the first network interface card or the second network interface card to the fusion network interface card (that is, no instruction from the fusion network interface card is required for triggering). Details are as follows.

Implementation 1: The fusion network interface card sends fourth indication information to the first network interface card or the second network interface card, and the fusion network interface card receives the second feedback information forwarded by the first network interface card or the second network interface card.

The fourth indication information indicates the first network interface card or the second network interface card to send the second feedback information to the fusion network interface card.

Implementation 2: The fusion network interface card receives the second feedback information forwarded by the first network interface card or the second network interface card (the first network interface card or the second network interface card actively reports the second feedback information, and no instruction from the fusion network interface card is required for triggering).

Further, optionally, the fusion network interface card sends the second reference information to the first network interface card based on the second feedback information and the second sequence number.

The second reference information is an example name used to distinguish from a piece of reference information. The second reference information may be information generated by the fusion network interface card based on the second feedback information and the second sequence number, and the second reference information is used to request the first network interface card to retransmit the second packet.

Optionally, the following provides two possible cases of the second reference information by using examples. Details are as follows.

Case 1: The second reference information is the second feedback information. In other words, the first network interface card directly resends the second packet to the second compute device based on the second feedback information.

For example, with reference to Table 1, the second packet is the packet 3, the second sequence number is the sequence number 003, and the network interface card corresponding to the sent packet 3 is a physical network interface card 1. When the second feedback information is information sent by the second compute device to the fusion network interface card after the second compute device fails to receive the packet 3, the fusion network interface card forwards the second feedback information and the sequence number 003 corresponding to the packet 3 to the physical network interface card 1. The physical network interface card 1 determines whether the packet 3 is a packet sent by the physical network interface card 1. If the packet 3 is the packet sent by the physical network interface card 1, the physical network interface card 1 resends the packet 3 to the second compute device until the fusion network interface card receives feedback information sent by the second compute device to the fusion network interface card after the second compute device successfully receives the packet 3.

Case 2: The second reference information is fifth indication information, and the fifth indication information indicates the first network interface card to retransmit the second packet. In other words, the first network interface card resends the second packet to the second compute device based on the indication information of the fusion network interface card, and the second feedback information is still processed by the fusion network interface card.

For example, with reference to Table 1, the second packet is the packet 3, the second sequence number is the sequence number 003, and the network interface card corresponding to the sent packet 3 is the physical network interface card 1. When the second feedback information is information sent by the second compute device to the fusion network interface card after the second compute device fails to receive the packet 3, the fusion network interface card sends the second feedback information and the sequence number 003 corresponding to the packet 3 to the physical network interface card 1. The physical network interface card 1 directly resends the packet 3 to the second compute device based on the second feedback information and the sequence number 003 corresponding to the packet 3, until the second compute device successfully receives the packet 3 and sends feedback information to the fusion network interface card.

In this application, in one aspect, compared with the conventional technology in which the first compute device needs to split a packet before the packet is sent and an upper-layer application needs to sense a quantity of network interface cards at a physical layer, in this application, a plurality of physical network interface cards are fused into a fusion network interface card, and subsequent external operations are performed by an application layer and the fusion network interface card. Therefore, the application layer does not need to split the packet, and the upper-layer application does not need to sense the quantity of network interface cards at the physical layer, thereby reducing overheads of a network protocol stack. In addition, in the conventional technology, a maximum bandwidth of a device presented to the upper-layer application is a maximum capability of a network interface card/IO die. However, in this application, the plurality of physical network interface cards are fused into the fusion network interface card, so that a maximum bandwidth can exceed a bandwidth limit of a single physical network interface card.

On the other hand, in this application, both a packet sequence number and feedback information from the second compute device are synchronized to the fusion network interface card, and the fusion network interface card performs unified management and configuration. After the fusion network interface card determines a network interface card corresponding to a sent packet, the fusion network interface card notifies the network interface card sending the corresponding packet of releasing buffer of the packet. This can ensure reliable data transmission between network devices, effectively ensure that the data buffered in the physical network interface card is released, and avoid a case in which the network interface card that needs to release the buffer of the packet cannot perform release, without resulting in buffer overflow.

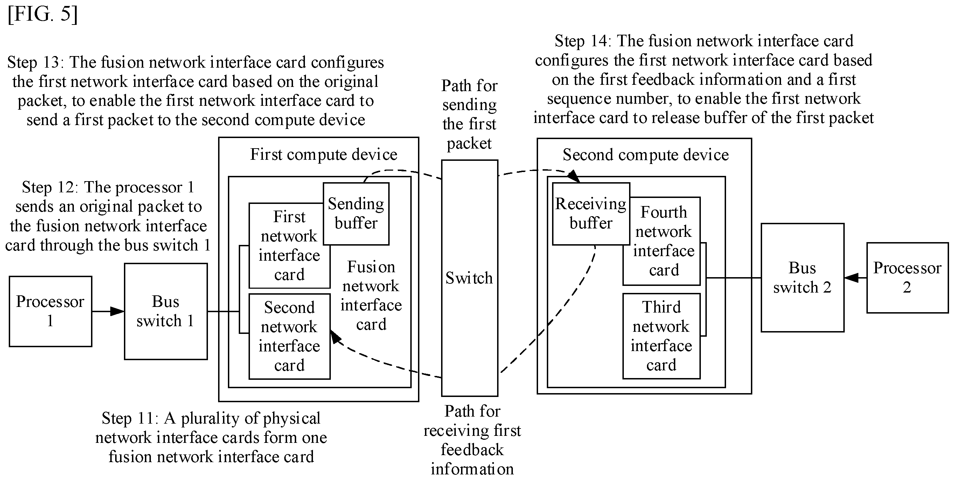

The embodiment shown in FIG. 4 describes in detail a principle of interaction between the processor, the fusion network interface card, and the first network interface card. For ease of understanding, the following describes, with reference to FIG. 5, a specific example in which the fusion network interface card configures the first network interface card, to enable the first network interface card to release the buffer of the first packet.

FIG. 5 is a diagram in which a fusion network interface card configures a first network interface card, to enable the first network interface card to release buffer of a first packet according to an embodiment of this application. As shown in FIG. 5, specific steps of Case 1 are as follows.

Step 11: A plurality of physical network interface cards are fused into one fusion network interface card.

Step 12: A processor 1 sends an original packet to the fusion network interface card through a bus switch 1.

Step 13: The fusion network interface card configures the first network interface card based on the original packet, to enable the first network interface card to send the first packet to a second compute device.

Step 14: The fusion network interface card configures the first network interface card based on first feedback information and a first sequence number, to enable the first network interface card to release buffer of the first packet.

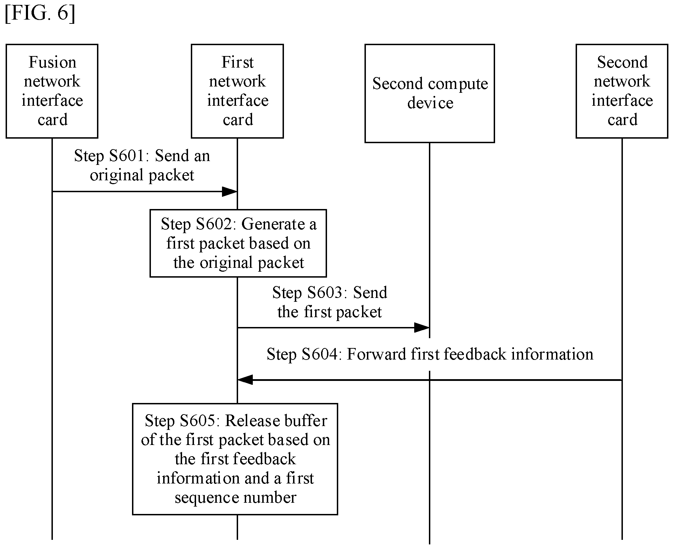

FIG. 6 is a schematic interaction flowchart of another bus technology-based data transmission method according to an embodiment of this application. The data transmission method may also be referred to as a bus switching technology-based packet forwarding method. It should be understood that names of a method, an apparatus, and information in this application are merely examples, and the names may be replaced with any other names in a specific implementation process. The data transmission method is described from a perspective of interaction between the fusion network interface card, the first network interface card, the second compute device, and the second network interface card. Optionally, the data transmission method may be applied to the foregoing data transmission system, for example, the data transmission system shown in FIG. 1 and FIG. 2.

The data transmission method includes one or more of step S601 to step S605. It should be understood that, herein, for ease of description, a sequence of step S601 to step S605 is used for description, but this is not intended to limit execution necessarily in the foregoing sequence. An execution sequence, execution time, a quantity of execution times, and the like of the foregoing one or more steps are not limited in embodiments of this application. Another step may alternatively be interpolated between, before or after these steps as required. Step S601 to step S605 are specifically as follows.

Step S601: The fusion network interface card sends an original packet to the first network interface card.

Correspondingly, the first network interface card receives the original packet sent by the fusion network interface card.

The fusion network interface card is formed by fusing a first network interface card and a second network interface card. The fusion network interface card runs on a first compute device. The first compute device includes the first network interface card, the second network interface card, and the processor. The first compute device is a device having a communication capability and a computing capability. For example, the first compute device may be a cloud, or the first compute device may be a server. This is not limited in this application.

The first network interface card and the second network interface card are also devices having a communication capability and a computing capability. The first network interface card or the second network interface card is an example name used to distinguish from a network interface card. For example, the first network interface card or the second network interface card may be a physical network interface card 1, a physical network interface card 2, a physical network interface card 3, or another network interface card.

Step S602: The first network interface card generates a first packet based on the original packet.

The first packet includes a first sequence number, and the first sequence number indicates that the first packet is sent by the first network interface card.

For example, the fusion network interface card sends the original packet to the first network interface card, to enable the first network interface card to generate the first packet based on the original packet and send the first packet to the second compute device. After receiving the original packet from the fusion network interface card, the first network interface card adds the first sequence number to the original packet to obtain the first packet, and actively sends the first packet to the second compute device (that is, no instruction from the fusion network interface card is required for triggering).

Optionally, that the first sequence number indicates that the first packet is sent by the first network interface card indicates that a mapping relationship is formed between the sequence number, the packet, and the network interface card, so that the network interface card searches for a packet sent by the network interface card. For example, the first packet is the packet 1. A sequence number carried in the packet 1 is 001, and a network interface card corresponding to the sent packet 1 is the physical network interface card 1.

Step S603: The first network interface card sends the first packet to the second compute device.

Correspondingly, the second compute device receives the first packet from the first network interface card.

The second compute device is a device having a communication capability and a computing capability. For example, the second compute device may be a cloud, or the second compute device may be a server. This is not limited in this application.

Step S604: The second network interface card forwards first feedback information to the first network interface card.

Correspondingly, the first network interface card receives the first feedback information forwarded by the second network interface card.

The first feedback information indicates that the second compute device successfully receives the first packet.

It should be noted that, for detailed explanations of specific terms in step S604, reference may be made to the embodiment described in FIG. 5. Details are not described herein again.

For example, with reference to Table 1, the first packet is a packet 1, the first sequence number is a sequence number 001, and a network interface card corresponding to the sent packet 1 is a physical network interface card 1. When the first feedback information is information sent by the second compute device to the fusion network interface card after the second compute device successfully receives the packet 1, and the first feedback information randomly arrives at the physical network interface card 2 in the first compute device, the physical network interface card 2 determines, based on the first feedback information and the sequence number 001, that the packet 1 is not a packet sent by the physical network interface card 2, and forwards the first feedback information to the physical network interface card 1. Correspondingly, the physical network interface card 1 receives the first feedback information forwarded by the physical network interface card 2.

Step S605: The first network interface card releases buffer of the first packet based on the first feedback information and the first sequence number.

For example, with reference to Table 1, after the physical network interface card 1 receives the first feedback information forwarded by the physical network interface card 2, the physical network interface card 1 determines, based on the first feedback information and the sequence number 001, that the packet 1 is a packet sent by the physical network interface card 1, indicating that reliable data transmission between devices is successfully implemented. In this case, the packet 1 buffered by the physical network interface card 1 is directly released, thereby optimizing resource utilization and reducing database load.

In a possible implementation, the first network interface card receives second feedback information sent by the second compute device.

The second feedback information is an example name used to distinguish from a piece of feedback information. For example, the second feedback information is packet arrival acknowledgment information, and the second feedback information indicates that the second compute device successfully receives a second packet. For example, with reference to Table 1, the second feedback information is information sent by the second compute device to the fusion network interface card after the second compute device successfully receives the packet 2. The second feedback information randomly arrives at the physical network interface card 1 or the physical network interface card 2.

The second packet includes a second sequence number, and the second sequence number indicates that the second packet is sent by the second network interface card. For example, the packet 2 includes a sequence number 002, and the network interface card corresponding to the sent packet 2 is the physical network interface card 2.

Optionally, when determining that the second packet is not sent by the first network interface card, the first network interface card forwards the second feedback information to the second network interface card, where the second feedback information is used to release buffer of the second packet. For example, after the physical network interface card 1 receives the second feedback information sent by the second compute device, the physical network interface card 1 determines, based on the second feedback information and the sequence number 002, that the packet 2 is not a packet sent by the physical network interface card 1, indicating that a reception path and a transmission path of the packet 2 are inconsistent. To successfully release buffer of the packet 2 in the network interface card, the physical network interface card 1 may forward the second feedback information to the physical network interface card 2.

In a possible implementation, the first network interface card generates a third packet based on the original packet, sends the third packet to the second compute device, then receives third feedback information forwarded by the second network interface card, and finally resends the third packet to the second compute device.

The third packet includes a third sequence number, and the third sequence number indicates that the third packet is sent by the first network interface card. For example, with reference to Table 1, the packet 3 includes the sequence number 003, and the network interface card corresponding to the sent packet 3 is the physical network interface card 1.

The third feedback information indicates that the second compute device fails to receive the third packet, and the third feedback information is used to request the first network interface card to retransmit the third packet.

For example, still with reference to Table 1, when the third feedback information is information sent by the second compute device to the fusion network interface card after the second compute device fails to receive the packet 3, the second feedback information randomly arrives at the physical network interface card 2. If the physical network interface card 2 determines, based on the third feedback information and the sequence number 003, that the packet 3 is not a packet sent by the physical network interface card 2, it indicates that a reception path and a transmission path of the packet 3 are inconsistent. To successfully release buffer of the packet 3 in the network interface card, the physical network interface card 2 forwards the third feedback information to the physical network interface card 1. Correspondingly, after receiving the third feedback information, the physical network interface card 1 determines, based on the third feedback information and the sequence number 003, that the packet 3 is a packet sent by the physical network interface card 1, and directly resends the packet 3 to the second compute device until the second compute device successfully receives the packet 3, indicating that reliable data transmission between devices is successfully implemented.

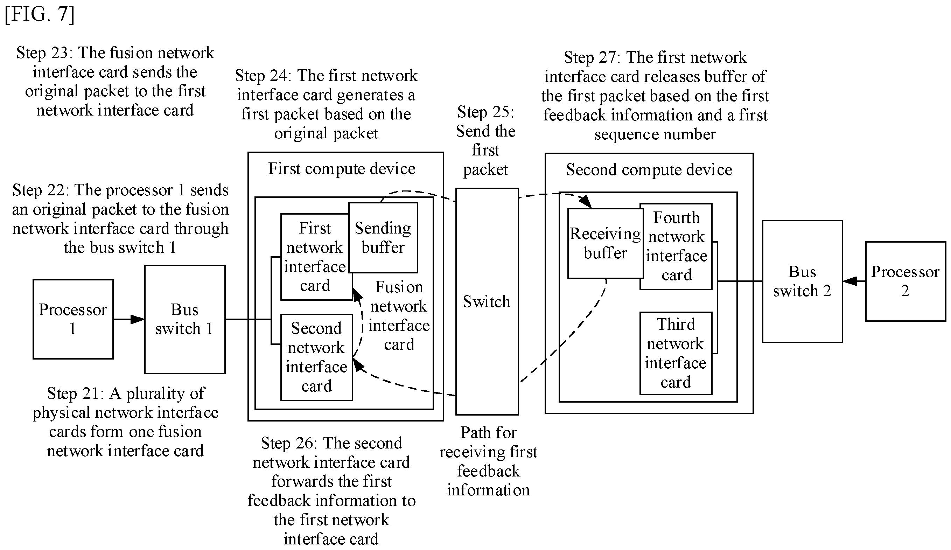

The embodiment shown in FIG. 6 describes in detail a principle of interaction between the processor, the fusion network interface card, and the first network interface card. For ease of understanding, the following describes, with reference to FIG. 7, a specific example in which the fusion network interface card configures the first network interface card, to enable the first network interface card to release the buffer of the first packet.

FIG. 7 is another diagram in which a fusion network interface card configures a first network interface card, to enable the first network interface card to release buffer of a first packet according to an embodiment of this application. As shown in FIG. 7, specific steps of Case 2 are as follows.

Step 21: A plurality of physical network interface cards are fused into one fusion network interface card.

Step 22: A processor 1 sends an original packet to the fusion network interface card through a bus switch 1.

Step 23: The fusion network interface card sends the original packet to a first network interface card.

Step 24: The first network interface card generates a first packet based on the original packet.

Step 25: The first network interface card sends the first packet to a second compute device.

Step 26: A second network interface card forwards first feedback information to the first network interface card.

Optionally, after receiving first feedback information from A fourth network interface card, the second network interface card forwards the first feedback information to the first network interface card.

Step 27: The first network interface card releases buffer of the first packet based on the first feedback information and a first sequence number.

The foregoing describes in detail the methods in embodiments of this application. The following provides apparatuses in embodiments of this application.

It should be understood that in the apparatus provided in embodiments of this application, division into units is merely logical function division. During actual implementation, all or some of the units may be integrated into one physical entity, or may be physically separated. In addition, the units in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of units of the apparatus. The processor is, for example, a general-purpose processor, for example, a central processing unit (central processing unit, CPU) or a microprocessor. The memory is a memory inside the apparatus or a memory outside the apparatus.

Alternatively, a unit in the apparatus may be implemented in a form of a hardware circuit, and the hardware circuit may be designed to implement functions of some or all of the units. The hardware circuit may be understood as one or more processors. For example, in an implementation, the hardware circuit is an application-specific integrated circuit (application-specific integrated circuit, ASIC), and a logical relationship between elements in the circuit is designed to implement functions of a part or all of the units. For another example, in another implementation, the hardware circuit may be implemented by using a programmable logic device (programmable logic device, PLD). A field programmable gate array (field programmable gate array, FPGA) is used as an example. The hardware circuit may include a large quantity of logic gate circuits, and a connection relationship between the logic gate circuits is configured based on a configuration file, to implement the functions of some or all of the units.

In embodiments of this application, the units in the apparatus may be configured as one or more processors (or processing circuits) for implementing the foregoing methods, for example, a CPU, a graphics processing unit (graphics processing unit, GPU), a neural network processing unit (neural network processing unit, NPU), a tensor processing unit (tensor processing unit, TPU), a deep learning processing unit (deep learning processing unit, DPU), a microprocessor (microprocessor unit, MPU), a digital signal processor (digital signal processor, DSP), an ASIC, an FPGA, or a combination of at least two of these processor forms.

In addition, all or some of the units of the apparatus may be integrated, or may be implemented independently. In an implementation, these units are integrated together, and implemented in a form of a system-on-chip (system-on-chip, SoC, or referred to as a system on a chip). The SOC may include at least one processor, configured to implement any one of the foregoing methods or implement functions of the units of the apparatus. The at least one processor may be of different types, for example, including a CPU and an FPGA, or including a CPU and an artificial intelligence processor, or including a CPU and a GPU. The following lists several possible apparatuses.

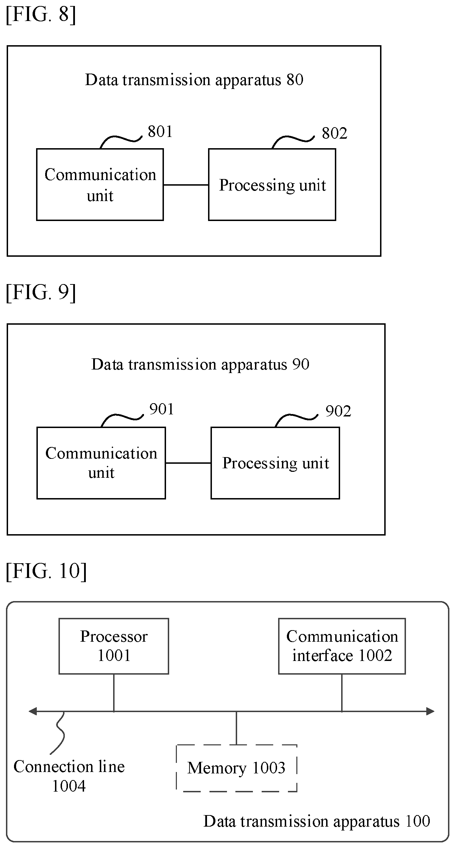

FIG. 8 is a diagram of a structure of a bus technology-based data transmission apparatus 80 according to an embodiment of this application. Optionally, the data transmission apparatus 80 may be an independent device (for example, a fusion network interface card). Alternatively, the data transmission apparatus 80 may be a component in an independent device, for example, a chip or an integrated circuit. The data transmission apparatus 80 is configured to implement the foregoing data transmission method, for example, the data transmission method shown in FIG. 4 or FIG. 6.

In a possible design, the data transmission apparatus 80 includes a communication unit 801 and a processing unit 802. The communication unit 801 is configured to send and receive a packet, and the processing unit 802 is configured to process the packet. The communication unit 801 and the processing unit 802 are configured to perform collaborative processing. The data transmission apparatus 80 is configured to implement the foregoing bus switching technology-based packet forwarding method, for example, the data transmission method shown in FIG. 4 or FIG. 6. For example, the data transmission apparatus 80 is configured to perform, for example, the method performed by the fusion network interface card.

In a possible implementation, the communication unit 801 is configured to receive an original packet sent by the processor. The processing unit 802 is configured to configure a first network interface card based on the original packet, to enable the first network interface card to send a first packet to a second compute device, where the first packet includes a first sequence number, and the first sequence number indicates that the first packet is sent by the first network interface card. The processing unit 802 is further configured to obtain first feedback information, where the first feedback information indicates that the second compute device successfully receives the first packet. The processing unit 802 is further configured to configure the first network interface card based on the first feedback information and the first sequence number, to enable the first network interface card to release buffer of the first packet.

In another possible implementation, in the aspect of configuring the first network interface card based on the first feedback information and the first sequence number, to enable the first network interface card to release the buffer of the first packet, the processing unit 802 is specifically configured to: send first reference information to the first network interface card based on the first feedback information and the first sequence number, where the first reference information is used to release the buffer of the first packet.

In another possible implementation, the first reference information is the first feedback information.

In another possible implementation, the first reference information is first indication information, and the first indication information indicates to release the buffered first packet.

In another possible implementation, the processing unit 802 is further configured to obtain second feedback information, where the second feedback information indicates that the second compute device fails to receive a second packet, the second packet includes a second sequence number, and the second sequence number indicates that the second packet is sent by the first network interface card. The communication unit 801 is further configured to send second reference information to the first network interface card based on the second feedback information and the second sequence number, where the second reference information is determined based on the second feedback information, and the second feedback information indicates the first network interface card to retransmit the second packet.

In another possible implementation, in the aspect of configuring the first network interface card based on the original packet, to enable the first network interface card to send the first packet to the second compute device, the processing unit 802 is specifically configured to: send the original packet to the first network interface card, to enable the first network interface card to generate the first packet based on the original packet and send the first packet to the second compute device. In another possible implementation, in the aspect of configuring the first network interface card based on the original packet, to enable the first network interface card to send the first packet to the second compute device, the processing unit 802 is specifically configured to: generate the first packet based on the original packet; and send the first packet to the first network interface card, to enable the first network interface card to send the first packet to the second compute device.

This embodiment of this application and the foregoing method embodiments are based on a same concept, and bring same technical effect. For a specific principle, refer to the descriptions of the foregoing embodiments. Details are not described again.

FIG. 9 is a diagram of a structure of another bus technology-based data transmission apparatus 90 according to an embodiment of this application. Optionally, the data transmission apparatus 90 may be an independent device (for example, a first network interface card). Alternatively, the data transmission apparatus 90 may be a component in an independent device, for example, a chip or an integrated circuit. The data transmission apparatus 90 is configured to implement the foregoing data transmission method, for example, the data transmission method shown in FIG. 4 or FIG. 6.

In a possible design, the data transmission apparatus 90 includes a communication unit 901 and a processing unit 902. The communication unit 901 is configured to send and receive a packet, the processing unit 902 is configured to process the packet, and the communication unit 901 and the processing unit 902 are configured to perform collaborative processing. The data transmission apparatus 90 is configured to implement the foregoing data transmission method, for example, the data transmission method shown in FIG. 4 or FIG. 6. For example, the data transmission apparatus 90 is configured to perform, for example, the method performed by the first network interface card.

In a possible implementation, the communication unit 901 is configured to receive an original packet sent by a fusion network interface card. The processing unit 902 is configured to generate a first packet based on the original packet, where the first packet includes a first sequence number, and the first sequence number indicates that the first packet is sent by the first network interface card. The communication unit 901 is further configured to send the first packet to the second compute device. The communication unit 901 is further configured to receive first feedback information forwarded by a second network interface card, where the first feedback information indicates that the second compute device successfully receives the first packet. The processing unit 902 is further configured to release buffer of the first packet based on the first feedback information and the first sequence number.

In another possible implementation, the communication unit 901 is further configured to receive second feedback information sent by the second compute device, where the second feedback information indicates that the second compute device successfully receives a second packet, the second packet includes a second sequence number, and the second sequence number indicates that the second packet is sent by the second network interface card. The communication unit 901 is further configured to forward the second feedback information to the second network interface card when the first network interface card determines that the second packet is not sent by the first network interface card, where the second feedback information is used to release buffer of the second packet.

In another possible implementation, the processing unit 902 is further configured to generate a third packet based on the original packet, where the third packet includes a third sequence number, and the third sequence number indicates that the third packet is sent by the first network interface card. The communication unit 901 is further configured to send a third packet to the second compute device, where the third packet includes a third sequence number, and the third sequence number indicates that the third packet is sent by the first network interface card. The communication unit 901 is further configured to receive third feedback information forwarded by the second network interface card, where the third feedback information indicates that the second compute device fails to receive the third packet, and the third feedback information is used to request the first network interface card to retransmit the third packet. The communication unit 901 is further configured to resend the third packet to the second compute device.

This embodiment of this application and the foregoing method embodiments are based on a same concept, and bring same technical effect. For a specific principle, refer to the descriptions of the foregoing embodiments. Details are not described again.

FIG. 10 is a diagram of a structure of still another bus technology-based data transmission apparatus 100 according to an embodiment of this application. The data transmission apparatus 100 may be an independent device, for example, a fusion network interface card or a first network interface card, or may be a component included in an independent device, for example, a chip, a software module, or an integrated circuit. The data transmission apparatus 100 may include at least one processor 1001 and a communication interface 1002. Optionally, the data transmission apparatus 100 may further include at least one memory 1003. Further, optionally, the data transmission apparatus 100 may further include a connection line 1004. The processor 1001, the communication interface 1002, and/or the memory 1003 are/is connected through the connection line 1004, and/or communicate with each other through the connection line 1004 to transmit a control signal and/or a data signal.

Details are as follows.

The processor 1001 is a module that performs an arithmetic operation and/or a logical operation, and may specifically include one or more of the following modules: a filter, a modem, a power amplifier, a low noise amplifier (low noise amplifier, LNA), a baseband processor, a radio frequency processor, a radio frequency circuit, a central processing unit (central processing unit, CPU), an application processor (application processor, AP), a microcontroller unit (microcontroller unit, MCU), an electronic control unit (electronic control unit, ECU), a graphics processing unit (graphics processing unit, GPU), a microprocessor unit (microprocessor unit, MPU), an application-specific integrated circuit (application-specific integrated circuit, ASIC), an image signal processor (image signal processor, ISP), a digital signal processor (digital signal processor, DSP), a field programmable gate array (field programmable gate array, FPGA), a complex programmable logic device (complex programmable logic device, CPLD), a coprocessor, or the like.

The communication interface 1002 may be configured to provide an information input or output for the at least one processor, or configured to receive a signal sent by the outside and/or send a signal to the outside.

For example, the communication interface 1002 may include an interface circuit.

For example, the communication interface 1002 may include a wired link interface like an Ethernet cable, or may be a wireless link (Wi-Fi, Bluetooth, universal wireless transmission, a vehicle-mounted short-range communication technology, another short-range wireless communication technology, or the like) interface.

Optionally, the communication interface 1002 may further include a radio frequency transmitter, an antenna, and the like. When the communication interface 1002 includes an antenna, there may be one or more antennas.

In a possible design, if the data transmission apparatus 100 is an independent device, the communication interface 1002 may include a receiver and a transmitter. The receiver and the transmitter may be a same component or different components. When the receiver and the transmitter are a same component, the component may be referred to as a transceiver.

In another possible design, if the data transmission apparatus 100 is a chip or a circuit, the communication interface 1002 may include an input interface and an output interface, and the input interface and the output interface may be a same interface or different interfaces.

Optionally, a function of the communication interface 1002 may be implemented by a transceiver circuit or a dedicated transceiver chip.

The memory 1003 is configured to provide storage space, and the storage space may store data, for example, an operating system and a computer program. The memory 1003 may be one or a combination of a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), or the like.

Functions and actions of modules or units in the data transmission apparatus 100 listed above are merely examples for description.

The functional units in the data transmission apparatus 100 may be configured to implement the foregoing communication method, for example, the data transmission method shown in FIG. 4 or FIG. 6, for example, configured to perform the method performed by the fusion network interface card or the first network interface card.

Optionally, the processor 1001 may be a processor specially configured to perform the foregoing method (referred to as a dedicated processor for ease of differentiation), or may be a processor that performs the foregoing method by invoking a computer program (referred to as a dedicated processor for ease of differentiation). Optionally, the at least one processor may further include both a dedicated processor and a general-purpose processor.

Optionally, when the data transmission apparatus 100 includes at least one memory 1003, if the processor 1001 implements the foregoing communication method by invoking a computer program, the computer program may be stored in the memory 1003.

This embodiment of this application and the foregoing method embodiments are based on a same concept, and bring same technical effect. For a specific principle, refer to the descriptions of the foregoing embodiments. Details are not described again.

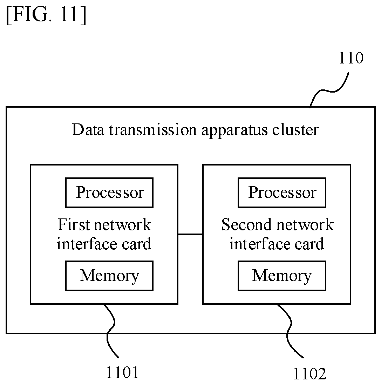

An embodiment of this application further provides a data transmission apparatus pool. As shown in FIG. 11, the data transmission apparatus pool 110 includes at least one data transmission apparatus (for example, including a first network interface card 1101 and a second network interface card 1102), and the at least one data transmission apparatus includes a processor and a memory. The memory is configured to store computer instructions, and the computer instructions are loaded and executed by the processor, to enable the at least one data transmission apparatus to implement the foregoing data transmission method, for example, the bus technology-based data transmission method shown in FIG. 4 or FIG. 6.

An embodiment of this application further provides a computer-readable storage medium. The computer-readable storage medium stores instructions. When the instructions are run on at least one processor (or a communication apparatus), the foregoing data transmission method is implemented, for example, the bus technology-based data transmission method shown in FIG. 4 or FIG. 6.

An embodiment of this application further provides a computer program product. The computer program product includes computer instructions, and the computer instructions are used to implement the foregoing data transmission method, for example, the bus technology-based data transmission method shown in FIG. 4 or FIG. 6.

It should be noted that, in embodiments of this application, a word "example" or "for example" is used to give an example, an illustration, or a description. Any embodiment or design scheme described as an "example" or "for example" in this application should not be explained as being more preferred or having more advantages than another embodiment or design scheme. Exactly, use of the word "example" or "for example" is intended to present a related concept in a specific manner.

"At least one" in embodiments of this application means one or more, and "a plurality of" means two or more. "At least one of the following items (pieces)" or a similar expression thereof means any combination of these items, including a single item (piece) or any combination of a plurality of items (pieces).

For example, at least one of a, b, or c may indicate: a, b, c, (a and b), (a and c), (b and c), or (a, b, and c), where a, b, and c may be singular or plural. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects.

In addition, unless otherwise stated, ordinal numbers such as "first" and "second" in embodiments of this application are for differentiation between a plurality of objects, but are not intended to limit an order, a time sequence, priorities, or importance of the plurality of objects. For another example, the first node and the second node are merely used to facilitate description of fresh parameters in different implementations, and do not represent different execution operations, importance, structures, and the like.

Based on the context, the term "when" used in the foregoing embodiments may be interpreted as "if", "before", "determining", or "detecting". The foregoing descriptions are merely optional embodiments of this application, but are not intended to limit this application. Any modification, equivalent replacement, improvement, or the like made within the concept and principle of this application shall fall within the protection scope of this application.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

## Claims

1. A bus technology-based data transmission method, applied to a fusion network interface card, wherein the fusion network interface card runs on a first compute device, the first compute device comprises a first network interface card, a second network interface card, and a processor, and the method comprises:
receiving an original packet sent by the processor;
configuring the first network interface card based on the original packet, to enable the first network interface card to send a first packet to a second compute device, wherein the first packet comprises a first sequence number, and the first sequence number indicates that the first packet is sent by the first network interface card;
obtaining first feedback information, wherein the first feedback information indicates that the second compute device successfully receives the first packet; and
configuring the first network interface card based on the first feedback information and the first sequence number, to enable the first network interface card to release buffer of the first packet.

2. The method according to claim 1, wherein the configuring the first network interface card based on the first feedback information and the first sequence number, to enable the first network interface card to release the buffer of the first packet comprises:
sending first reference information to the first network interface card based on the first feedback information and the first sequence number, wherein the first reference information is used to release the buffer of the first packet.

3. The method according to claim 1 or 2, wherein
the first reference information is the first feedback information.

4. The method according to claim 1 or 2, wherein
the first reference information is first indication information, wherein the first indication information indicates to release the buffered first packet.

5. The method according to any one of claims 1 to 4, wherein the method further comprises:
obtaining second feedback information, wherein the second feedback information indicates that the second compute device fails to receive a second packet, the second packet comprises the second sequence number, and the second sequence number indicates that the second packet is sent by the first network interface card; and
sending second reference information to the first network interface card based on the second feedback information and the second sequence number, wherein the second reference information indicates the first network interface card to retransmit the second packet.

6. The method according to any one of claims 1 to 5, wherein the configuring the first network interface card based on the original packet, to enable the first network interface card to send the first packet to the second compute device comprises:
sending the original packet to the first network interface card, to enable the first network interface card to generate the first packet based on the original packet and send the first packet to the second compute device.

7. The method according to any one of claims 1 to 5, wherein the configuring the first network interface card based on the original packet, to enable the first network interface card to send the first packet to the second compute device comprises:
generating the first packet based on the original packet; and
sending the first packet to the first network interface card, to enable the first network interface card to send the first packet to the second compute device.

8. A bus technology-based data transmission method, applied to a first compute device, wherein the first compute device comprises a first network interface card, a second network interface card, and a processor, a fusion network interface card runs on the first compute device, and the method comprises:
sending, by the processor, an original packet to the fusion network interface card;
configuring, by the fusion network interface card, the first network interface card based on the original packet, to enable the first network interface card to send a first packet to a second compute device, wherein the first packet comprises a first sequence number, and the first sequence number indicates that the first packet is sent by the first network interface card;
obtaining, by the fusion network interface card, first feedback information, wherein the first feedback information indicates that the second compute device successfully receives the first packet; and
configuring, by the fusion network interface card, the first network interface card based on the first feedback information and the first sequence number, to enable the first network interface card to release buffer of the first packet.

9. A bus technology-based data transmission method, applied to a first network interface card in a first compute device, wherein the first compute device comprises the first network interface card, a second network interface card, and a processor, the fusion network interface card runs on the first compute device, and the method comprises:
receiving an original packet sent by the fusion network interface card;
generating a first packet based on the original packet, wherein the first packet comprises a first sequence number, and the first sequence number indicates that the first packet is sent by the first network interface card;
sending the first packet to a second compute device;
receiving first feedback information forwarded by the second network interface card, wherein the first feedback information indicates that the second compute device successfully receives the first packet; and
releasing buffer of the first packet based on the first feedback information and the first sequence number.

10. The method according to claim 9, wherein the method further comprises:
receiving second feedback information sent by the second compute device, wherein the second feedback information indicates that the second compute device successfully receives a second packet, the second packet comprises a second sequence number, and the second sequence number indicates that the second packet is sent by the second network interface card; and
when the first network interface card determines that the second packet is not sent by the first network interface card, forwarding the second feedback information to the second network interface card, wherein the second feedback information is used to release buffer of the second packet.

11. The method according to claim 9 or 10, wherein the method further comprises:
generating a third packet based on the original packet, wherein the third packet comprises a third sequence number, and the third sequence number indicates that the third packet is sent by the first network interface card;
sending the third packet to the second compute device;
receiving third feedback information forwarded by the second network interface card, wherein the third feedback information indicates that the second compute device fails to receive the third packet, and the third feedback information is used to request the first network interface card to retransmit the third packet; and
resending the third packet to the second compute device.

12. A bus technology-based data transmission method, applied to a first compute device, wherein the first compute device comprises a first network interface card, a second network interface card, and a processor, a fusion network interface card runs on the first compute device, and the method comprises:
sending, by the fusion network interface card, an original packet of the processor to the first network interface card;
generating, by the first network interface card, a first packet based on the original packet, wherein the first packet comprises a first sequence number, and the first sequence number indicates that the first packet is sent by the first network interface card;
sending, by the first network interface card, the first packet to a second compute device;
receiving, by the first network interface card, the first feedback information forwarded by the second network interface card, wherein the first feedback information indicates that the second compute device successfully receives the first packet; and
releasing, by the first network interface card, buffer of the first packet based on the first feedback information and the first sequence number.

13. A bus technology-based data transmission apparatus, wherein the data transmission apparatus comprises a communication unit and a processing unit, wherein
the communication unit is configured to receive an original packet sent by a processor;
the processing unit is configured to configure the first network interface card based on the original packet, to enable the first network interface card to send a first packet to a second compute device, wherein the first packet comprises a first sequence number, and the first sequence number indicates that the first packet is sent by the first network interface card;
the processing unit is further configured to obtain first feedback information, wherein the first feedback information indicates that the second compute device successfully receives the first packet; and
the processing unit is further configured to configure the first network interface card based on the first feedback information and the first sequence number, to enable the first network interface card to release buffer of the first packet.

14. The apparatus according to claim 13, wherein for configuring the first network interface card based on the first feedback information and the first sequence number, to enable the first network interface card to release the buffer of the first packet, the processing unit is specifically configured to:
send first reference information to the first network interface card based on the first feedback information and the first sequence number, wherein the first reference information is used to release the buffer of the first packet.

15. The apparatus according to claim 13 or 14, wherein
the first reference information is the first feedback information.

16. The apparatus according to claim 13 or 14, wherein
the first reference information is first indication information, wherein the first indication information indicates to release the buffered first packet.

17. The apparatus according to any one of claims 13 to 16, wherein
the processing unit is further configured to obtain second feedback information, wherein the second feedback information indicates that the second compute device fails to receive the second packet, the second packet comprises a second sequence number, and the second sequence number indicates that the second packet is sent by the first network interface card; and
the communication unit is further configured to send second reference information to the first network interface card based on the second feedback information and the second sequence number, wherein the second reference information indicates the first network interface card to retransmit the second packet.

18. The apparatus according to any one of claims 13 to 17, wherein for configuring the first network interface card based on the original packet, to enable the first network interface card to send the first packet to the second compute device, the processing unit is specifically configured to:
send the original packet to the first network interface card, to enable the first network interface card to generate the first packet based on the original packet and send the first packet to the second compute device.

19. The apparatus according to any one of claims 13 to 17, wherein for configuring the first network interface card based on the original packet, to enable the first network interface card to send the first packet to the second compute device, the processing unit is specifically configured to:
generate the first packet based on the original packet; and
send the first packet to the first network interface card, to enable the first network interface card to send the first packet to the second compute device.

20. A bus technology-based data transmission apparatus, wherein the data transmission apparatus comprises a communication unit and a processing unit, wherein
the communication unit is configured to receive an original packet sent by a fusion network interface card;
the processing unit is configured to generate a first packet based on the original packet, wherein the first packet comprises a first sequence number, and the first sequence number indicates that the first packet is sent by a first network interface card;
the communication unit is further configured to send the first packet to a second compute device;
the communication unit is further configured to receive first feedback information forwarded by a second network interface card, wherein the first feedback information indicates that the second compute device successfully receives the first packet; and
the processing unit is further configured to release buffer of the first packet based on the first feedback information and the first sequence number.

21. The apparatus according to claim 20, wherein
the communication unit is further configured to receive second feedback information sent by the second compute device, wherein the second feedback information indicates that the second compute device successfully receives a second packet, the second packet comprises a second sequence number, and the second sequence number indicates that the second packet is sent by the second network interface card; and
the communication unit is further configured to forward the second feedback information to the second network interface card when the first network interface card determines that the second packet is not sent by the first network interface card, wherein the second feedback information is used to release buffer of the second packet.

22. The apparatus according to claim 20 or 21, wherein
the processing unit is further configured to generate a third packet based on the original packet, wherein the third packet comprises a third sequence number, and the third sequence number indicates that the third packet is sent by the first network interface card;
the communication unit is further configured to send the third packet to the second compute device;
the communication unit is further configured to receive third feedback information forwarded by the second network interface card, wherein the third feedback information indicates that the second compute device fails to receive the third packet, and the third feedback information is used to request the first network interface card to retransmit the third packet; and
the communication unit is further configured to resend the third packet to the second compute device.

23. A data transmission apparatus pool, wherein the data transmission apparatus pool comprises at least one data transmission apparatus, the at least one data transmission apparatus comprises a processor and a memory, the memory is configured to store computer instructions, and the computer instructions are loaded and executed by the processor, to enable the at least one data transmission apparatus to implement the method according to any one of claims 1 to 12.

24. A computer-readable storage medium, wherein the computer-readable storage medium is configured to store a computer program, and the computer program comprises an instruction for performing the method according to any one of claims 1 to 12.

25. A computer program product, comprising instructions or a computer program, wherein
when the instructions or the computer program is executed, the method according to any one of claims 1 to 12 is implemented.
